# EUROPÄISCHE PATENTANMELDUNG

(11) **EP 0 811 642 A2**
(43) Veröffentlichungstag der Anmeldung: **10.12.1997**
(21) Anmeldenummer: 97108499.1
(22) Anmeldetag: 27.05.1997
(51) Int. Cl.: C08F 210/00, C08F 4/645

(54) **Copolymere von Alk-1-enen und alpha,omega-Dienen mit erhöhtem Viskositätsindex**

(30) Priorität: 03.06.1996 DE 19622272
(71) Anmelder: BASF AKTIENGESELLSCHAFT, 67056 Ludwigshafen (DE)
(72) Erfinder: Rösch, Joachim, Dr., 67069 Ludwigshafen (DE); Mach, Helmut, Dr., 69115 Heidelberg (DE); Gruber, Freddy, Dr., 76877 Offenbach (DE)

(57) **Zusammenfassung**

Copolymere mit einem Viskositätsindex VI von größer als 160 von
A) 99,0 bis 99,99 Gew.-% C₂- bis C₂₀-Alk-1-enen
   und
B) 0,01 bis 1,0 Gew.-% C₅- bis C₂₀-α,ω-Dienen mit isolierten Doppelbindungen.

## Beschreibung

Die vorliegende Erfindung betrifft Copolymere mit einem Viskositätsindex VI von größer als 160 von
A) 99,0 bis 99,99 Gew.-% C₂- bis C₂₀-Alk-1-enen
   und
B) 0,01 bis 1,0 Gew.-% C₅- bis C₂₀-α,ω-Dienen mit isolierten Doppelbindungen.

Weiterhin betrifft die vorliegende Erfindung Verfahren zur Herstellung solcher Copolymeren sowie deren Verwendung als Viskositätsverbesserer in Schmierstoffen und Motorölen.

Schmierstoffen und Motorölen werden meist Viskositätsverbesserer auf Basis von Polyisobuten, Polyalkylmethacrylaten oder hydrierten Styrol-Butadien-Blockcopolymerisaten zugesetzt.

Die EP-A 621 293 beschreibt Kammpolymere aus hydrierten Olefin-Copolymer-Makromonomeren und (Meth)acrylester-Monomeren und deren Verwendung als Öladditive. Nachteilig hierbei ist jedoch, daß die Olefin-Copolymer-Makromonomeren in getrennten Reaktionsschritten hergestellt werden müssen und daß (Meth)acrylester durch ihre Estergruppierung generell hydrolyseanfällig sind.

Aufgabe der vorliegenden Erfindung war es daher, Viskositätsverbesserer zu finden, die die genannten Nachteile nicht aufweisen und die insbesondere verfahrenstechnisch einfach herstellbar sind und die aus inerten Kohlenwasserstoffen bestehen und somit hydrolysebeständig sind.

Demgemäß wurden die eingangs definierten Copolymere gefunden.

Weiterhin wurden Verfahren zu ihrer Herstellung gefunden sowie ihre Verwendung als Viskositätsverbesserer in Schmierstoffen und Motorölen.

Zur Herstellung der erfindungsgemäßen Copolymeren werden als Monomere A) 99,0 bis 99,99 Gew.-%, vorzugsweise 99,5 bis 99,95 Gew.-%, insbesondere 99,7 bis 99,9 Gew.-% C₂- bis C₂₀-Alk-1-ene eingesetzt. Bevorzugt sind C₆- bis C₁₂-Alk-1-ene wie Hex-1-en, Hept-1-en, Oct-1-en, Non-1-en, Dec-1-en, Undec-1-en und Dodec-1-en aber auch Mischungen verschiedener C₂- bis C₂₀-Alk-1-ene, vorzugsweise Mischungen aus C₂- bis C₄-Alk-1-enen mit C₆- bis C₁₂-Alk-1-enen wie Mischungen aus Ethen und Dec-1-en oder Ethen und Oct-1-en aber auch aus Oct-1-en und Dec-1-en. Besonders bevorzugt werden Oct-1-en, Dec-1-en oder Dodec-1-en eingesetzt.

Als Monomere B) werden zur Herstellung der erfindungsgemäßen Copolymeren 0,01 bis 1,0 Gew.-%, vorzugsweise 0,05 bis 0,5 Gew.-%, insbesondere 0,1 bis 0,3 Gew.-% C₅- bis C₂₀-α,ω-Diene mit isolierten Doppelbindungen eingesetzt. Bevorzugt sind acyclische C₆- bis C₁₀-α,ω-Diene wie 1,5-Hexadien, 1,6-Heptadien, 1,7-Octadien, 1,8-Nonadien und 1,9-Decadien. Besonders bevorzugt werden 1,8-Nonadien oder 1,7-Octadien eingesetzt. Es können auch Mischungen verschiedener C₅- bis C₂₀-α,ω-Diene mit isolierten Doppelbindungen eingesetzt werden.

Die erfindungsgemäßen Copolymeren können durch Polymerisation in der Gasphase, in Suspension, in Lösung oder in flüssigen Monomeren hergestellt werden. Bevorzugt werden sie durch Polymerisation in Lösung oder in flüssigen Monomeren hergestellt.

Die Polymerisationsbedingungen sind an sich unkritisch, im allgemeinen arbeitet man bei Temperaturen im Bereich von -50 bis 300°C, vorzugsweise 0 bis 250°C, bei Drücken im Bereich von 0,5 bis 3000 bar, vorzugsweise 1 bis 2500 bar und polymerisiert über einen Zeitraum im Bereich von 0,1 bis 24 Stunden, vorzugsweise 0,2 bis 10 Stunden.

Die erfindungsgemäßen Copolymeren werden in Gegenwart eines Katalysatorsystems hergestellt. Als Katalysatorsysteme eignen sich beispielsweise Ziegler-Natta-Katalysatorsysteme, die allgemein bekannt und beispielsweise in Prog. Polym. Sci. (1991), 16, 443 beschrieben sind. Ziegler-Natta-Katalysatorsysteme enthalten u.a. neben einer titanhaltigen Feststoffkomponente noch einen Cokatalysator, wobei als Cokatalysatoren Aluminiumverbindungen in Frage kommen. Vorzugsweise wird neben dieser Aluminiumverbindung als weiterer Bestandteil des Cokatalysators noch eine Elektronendonorverbindung eingesetzt.

Vorzugsweise werden die erfindungsgemäßen Copolymeren in Gegenwart eines Katalysatorsystems, das als aktive Bestandteile einen Metallocenkomplex und eine metalloceniumionenbildende Verbindung enthält, hergestellt.

Als Metallocenkomplexe eigenen sich besonders solche der allgemeinen Formel I 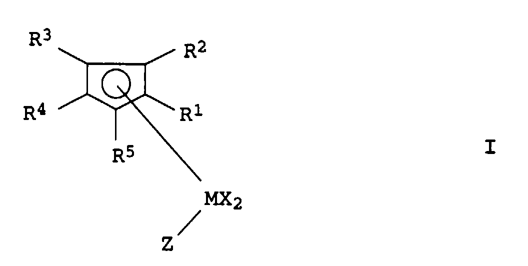 in der die Substituenten folgende Bedeutung haben:
- M: Titan, Zirkonium, Hafnium, Vanadium, Niob oder Tantal
- X: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁶ oder -NR⁶R⁷,
wobei
- R⁶ und R⁷: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
- R¹ bis R⁵: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R⁸)₃ mit
- R⁸: C₁- bis C₁₀-Alkyl, C₃- bis C₁₀-Cycloalkyl oder C₆- bis C₁₅-Aryl,
- Z: für X oder 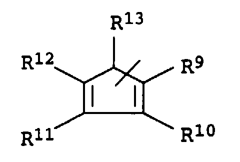 steht,
wobei die Reste
- R⁹ bis R¹³: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁴)₃ mit
- R¹⁴: C₁- bis C₁₀-Alkyl, C₆- bis C₁₅-Aryl oder C₃- bis C₁₀-Cycloalkyl,
oder wobei die Reste R⁴ und Z gemeinsam eine Gruppierung -R¹⁵-A-bilden, in der
R¹⁵ 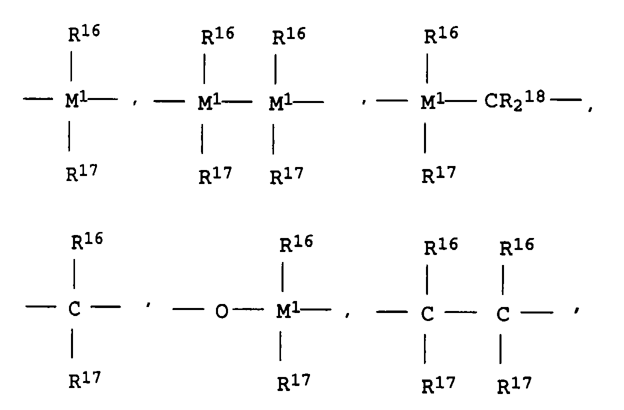 = BR¹⁶, = AlR¹⁶, -Ge-, -Sn-, -O-, -S-, = SO, = SO₂, = NR¹⁶, = CO, = PR¹⁶ oder = P(O)R¹⁶ ist, wobei
- R¹⁶, R¹⁷ und R¹⁸: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
- M¹: Silicium, Germanium oder Zinn ist,
- A: ―O―, ―S―, 〉NR¹⁹ oder 〉PR¹⁹ bedeuten, mit
- R¹⁹: C₁- bis C₁₀-Alkyl, C₆- bis C₁₅-Aryl, C₃- bis C₁₀-Cycloalkyl, Alkylaryl oder Si(R²⁰)₃,
- R²⁰: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁴ und R¹² gemeinsam eine Gruppierung -R¹⁵-bilden.

Von den Metallocenkomplexen der allgemeinen Formel I sind 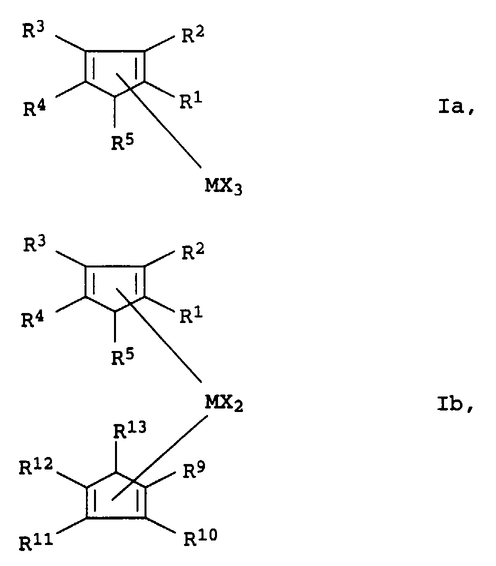 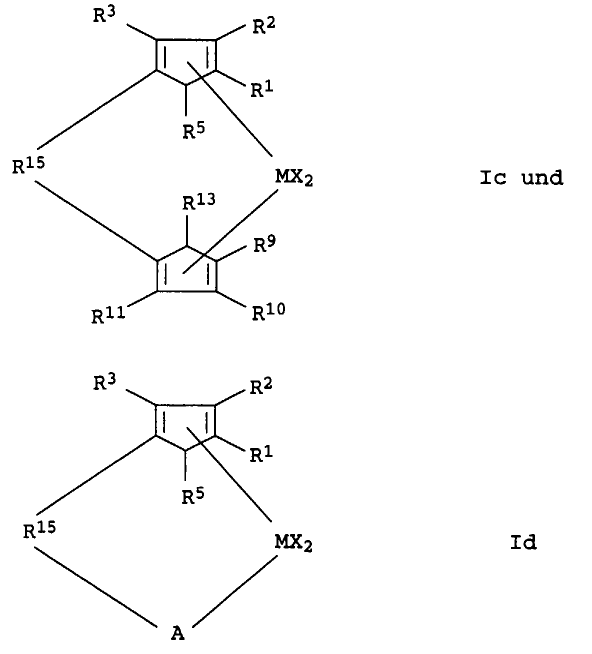 bevorzugt.

Die Reste X können gleich oder verschieden sein, bevorzugt sind sie gleich.

Von den Verbindungen der Formel Ia sind insbesondere diejenigen bevorzugt, in denen
- M: Titan, Zirkonium oder Hafnium,
- X: Chlor, C₁-bis C₄-Alkyl oder Phenyl und
- R¹ bis R⁵: Wasserstoff oder C₁- bis C₄-Alkyl bedeuten.

Von den Verbindungen der Formel Ib sind als bevorzugt diejenigen zu nennen, bei denen
- M: für Titan, Zirkonium oder Hafnium steht,
- X: für Chlor, C₁-bis C₄-Alkyl oder Phenyl,
- R¹ bis R⁵: Wasserstoff, C₁- bis C₄-Alkyl oder Si(R⁸)₃,
- R⁹ bis R¹³: Wasserstoff, C₁- bis C₄-Alkyl oder Si(R¹⁴)₃ bedeuten.

Insbesondere sind die Verbindungen der Formel Ib geeignet, in denen die Cyclopentadienylreste gleich sind.

Beispiele für besonders geeignete Verbindungen sind u.a.:
Bis(cyclopentadienyl)zirkoniumdichlorid,
Bis(pentamethylcyclopentadienyl)-zirkoniumdichlorid,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis(trimethylsilylcyclopentadienyl)-zirkoniumdichlorid sowie die entsprechenden Dimethylzirkoniumverbindungen.

Von den Verbindungen der Formel Ic sind diejenigen besonders geeignet, in denen
- R¹ und R⁹: gleich sind und für Wasserstoff oder C₁- bis C₁₀-Alkylgruppen stehen,
- R⁵ und R¹³: gleich sind und für Wasserstoff, eine Methyl-, Ethyl-, iso-Propyl- oder tert.-Butylgruppe stehen
- R², R³, R¹⁰ und R¹¹: die Bedeutung
R³ und R¹⁵ C₁- bis C₄-Alkyl
R² und R¹⁰ Wasserstoff
haben oder zwei benachbarte Reste R² und R³ sowie R¹⁰ und R¹¹ gemeinsam für 4 bis 12 C-Atome aufweisende cyclische Gruppen stehen,
- R¹⁵: für 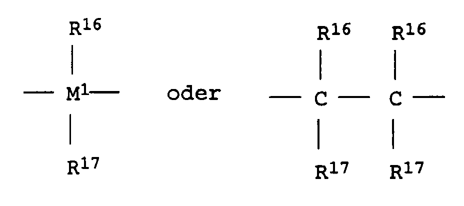 steht,
- M: für Titan, Zirkonium oder Hafnium und
- X: für Chlor, C₁-bis C₄-Alkyl oder Phenyl stehen.

Beispiele für besonders geeignete Komplexverbindungen sind u.a.
Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Dimethylsilandiylbis(-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis(-2-methylindenyl)-zirkoniumdichlorid,
Dimethylsilandiylbis(-2-methylbenzindenyl)-zirkoniumdichlorid
Dimethylsilandiylbis(2-ethylbenzindenyl)zirkoniumdichlorid,
Methylphenylsilandiylbis(2-ethylbenzindenyl)zirkoniumdichlorid,
Methylphenylsilandiylbis(2-methylbenzindenyl)zirkoniumdichlorid,
Diphenylsilandiylbis(2-methylbenzindenyl)zirkoniumdichlorid,
Diphenylsilandiylbis(2-ethylbenzindenyl)zirkoniumdichlorid, und
Dimethylsilandiylbis(-2-methylindenyl)-hafniumdichlorid sowie die entsprechenden Dimethylzirkoniumverbindungen.

Bei den Verbindungen der allgemeinen Formel Id sind als besonders geeignet diejenigen zu nennen, in denen
- M: für Titan oder Zirkonium,
- X: für Chlor, C₁-bis C₄-Alkyl oder Phenyl stehen.
- R¹⁵: für 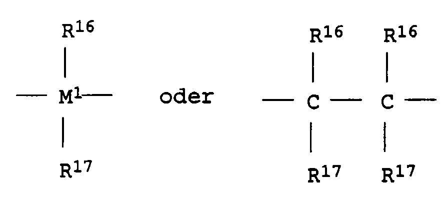 steht,
- A: für ―O―, ―S―, 〉NR¹⁹
und
- R¹ bis R³ und R⁵: für Wasserstoff, C₁- bis C₁₀-Alkyl, C₃- bis C₁₀-Cycloalkyl, C₆- bis C₁₅-Aryl oder Si(R⁸)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Geeignete metalloceniumionenbildende Verbindungen sind starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel II

M²X¹X²X³ II

bevorzugt, in der
- M²: ein Element der III. Hauptgruppe des Periodensystems bedeutet, insbesondere B, Al oder Ga, vorzugsweise B,
- X¹, X² und X³: für Wasserstoff, C1- bis C10-Alkyl, C6- bis C15-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel II, in der X¹, X² und X³ gleich sind, vorzugsweise Tris(pentafluorphenyl)boran.

Als ionische Verbindungen mit lewissauren Kationen sind Verbindungen der allgemeinen Formel III

[(Y^{a+})Q₁Q₂...Q_{z}]^{d+} III

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an metalloceniumionenbildenden Verbindungen beträgt bevorzugt 0,1 bis 10 Äquivalente, bezogen auf den Metallocenkomplex I.

Besonders geeignet als metalloceniumionenbildende Verbindung sind offenkettige oder cyclische Alumoxanverbindungen der allgemeinen Formel IV oder V 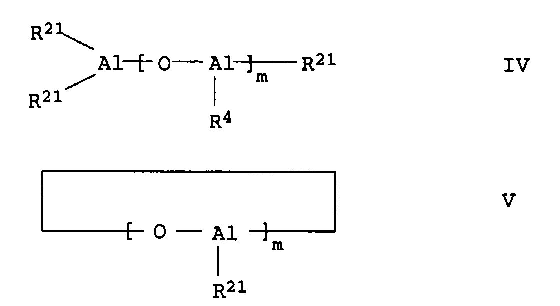
- wobei R²¹: eine C₁- bis C₄-Alkylgruppe bedeutet, bevorzugt Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Vorzugsweise werden sowohl die Metallocenkomplexe als auch die metalloceniumionenbildende Verbindungen in Lösung eingesetzt, wobei aromatische Kohlenwasserstoffe mit 6 bis 20 C-Atomen, insbesondere Xylole und Toluol, besonders bevorzugt sind.

Weiterhin können als metalloceniumionenbildende Verbindung Aryloxyalumoxane, wie in der US-A 5,391,793 beschrieben, Aminoaluminoxane, wie in der US-A 5,371,260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis 10⁶:1, insbesondere im Bereich von 10:1 bis 10⁴:1, liegt.

Bei dem Verfahren zur Herstellung der erfindungsgemäßen Copolymeren können die Katalysatorsysteme auch in geträgerter Form eingesetzt werden.

Als Trägermaterialien werden vorzugsweise feinteilige Träger eingesetzt, die bevorzugt einen Teilchendurchmesser im Bereich von 1 bis 300 µm aufweisen, insbesondere von 30 bis 70 µm. Geeignete anorganische Träger sind beispielsweise Magnesiumchlorid oder Kieselgele, bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkt sind im Handel erhältlich, z.B. Silica Gel 332 der Fa. Grace. Als organische Träger sind beispielsweise feinteilige Olefine geeignet, z.B. feinteiliges Polypropylen oder Polyethylen.

Das Verfahren kann sowohl kontinuierlich als auch diskontinuierlich durchgeführt werden. Geeignete Reaktoren sind u.a. kontinuierlich betriebene Rührkessel, wobei man gegebenenfalls auch eine Reihe von mehreren hintereinander geschalteten Rührkesseln verwenden kann (Reaktorkaskade).

Vorzugsweise geht man zur Herstellung der erfindungsgemäßen Copolymere so vor, daß man die Monomeren A) und B) vorlegt und auf eine Temperatur im Bereich von -10 bis 80°C bringt. Dann gibt man eine Lösung des Katalysatorsystems hinzu, wobei die Temperatur durch die Polymerisationswärme ansteigt. Nach Beendigung der Polymerisation extrahiert man das Reaktionsgemisch, vorzugsweise durch Zugabe von Säuren und engt die organische Phase ein.

Ebenfalls vorteilhaft ist es, die Monomeren A) und B) kontinuierlich in den Reaktor zu dosieren, so daß die Konzentration der Monomeren A) und B) im Reaktor konstant ist.

Die erfindungsgemäßen Copolymere weisen einen Viskositätsindex VI von größer als 160 auf, vorzugsweise liegt VI im Bereich von 160 bis 500, bevorzugt 180 bis 400, insbesondere 200 bis 350. Die Bestimmung des Viskositätsindex erfolgt nach ISO 2909 in einer 10 gew.-%igen Lösung durch Messung der Lösungsviskositäten bei 40°C und 100°C und anschließender Umrechnung entsprechend der in der ISO-Norm enthaltenen Tabellen. Als Lösungsmittel wird Solvent Neutral SN 100 eingesetzt, ein Produkt der fraktionierten Erdöldestillation mit einem Siedebereich von 230 bis 280°C und einer Viskosität (bei 50°C) von 14,8 mm²/sec (Hersteller: Wintershall Mineralöl GmbH).

Die erfindungsgemäßen Copolymere zeichnen sich durch chemische Inertheit und gute Löslichkeit in Kohlenwasserstoffen aus, sie sind verfahrenstechnisch einfach herstellbar und eignen sich als Viskositätsverbesserer in Schmierstoffen und Motorölen.

### Beispiele

### Beispiele 1 bis 4: Herstellung von Copolymeren aus Dec-1-en und 1,7-Octadien

### Beispiel 1:

In einem 1 l-Kolben wurden 500 g Dec-1-en und 1,25 g 1,7-Octadien (0,25 Gew.-%) vorgelegt und auf 50°C erwärmt. Hierzu wurde eine Lösung von 42 mg Ethylidenbis(indenyl)zirkondichlorid in 34 ml 1,7 molarer toluolischer Methylalumoxan (MAO)-Lösung gegeben. Die Innentemperatur stieg durch die Polymerisationswärme auf 55⁰C an. Nach einer Reaktionszeit von 2 Stunden wurde das Reaktionsgemisch mit 200 ml 0,1 n Schwefelsäure extrahiert und die organische Phase am Rotationsverdampfer eingeengt. Man erhielt 410 g hochviskoses Copolymer. Nicht abreagiertes 1,7-Octadien konnte im Destillat nicht nachgewiesen werden.

### Beispiel 2:

Es wurde wie in Beispiel 1 gearbeitet, jedoch wurden statt 0,25 Gew.-% 1,7-Octadien 0,125 Gew.-% 1,7-Octadien eingesetzt.

### Beispiel 3:

In einem 1 l-Kolben wurden 500 g Oct-1-en und 1,25 g 1,7-Octadien (0,25 Gew.-%) vorgelegt und auf 0°C gekühlt. Hierzu wurde eine Lösung von 45 mg Dimethylsilylbis(indenyl)zirkondichlorid in 34 ml 1,7 molarer toluolischer Methylalumoxan (MAO)-Lösung gegeben. Die Innentemperatur stieg durch die Polymerisationswärme auf 5°C an. Nach einer Reaktionszeit von 8 Stunden wurde das Reaktionsgemisch mit 200 ml 0,1 n Schwefelsäure extrahiert und die organische Phase am Rotationsverdampfer eingeengt. Man erhielt 370 g hochviskoses Copolymer. Nicht abreagiertes 1,7-Octadien konnte im Destillat nicht nachgewiesen werden.

### Beispiel 4:

Es wurde wie in Beispiel 3 gearbeitet, jedoch wurden statt 0,25 Gew.-% 1,7-Octadien 0,125 Gew.-% 1,7-Octadien eingesetzt. Man erhielt 350 g hochviskoses Copolymer.

### Vergleichsbeispiel V1: Herstellung von Homopolymer aus Dec-1-en

Es wurde wie in Beispiel 1 gearbeitet, jedoch nur Dec-1-en und kein 1,7-Octadien vorgelegt. Nach Abdestillieren des nicht abreagierten Dec-1-ens erhielt man 390 g viskoses Polydecen.

### Vergleichsbeispiel V2: Herstellung von Homopolymer aus Oct-1-en

Es wurde wie in Beispiel 3 gearbeitet, jedoch nur Oct-1-en und kein 1,7-Octadien vorgelegt. Nach Abdestillieren des nicht abreagierten Oct-1-ens erhielt man 290 g viskoses Polyocten.

Eigenschaften der entstandenen Copolymeren sind in der nachfolgenden Tabelle aufgeführt.

Die Molekulargewichte Mₙ (Zahlenmittelwert) und M_{w} (Gewichtsmittelwert) wurden mittels Gelpermeationschromatographie bestimmt.

Der Viskositätsindex VI wurde nach ISO 2909 in einer 10 gew.-%igen Lösung durch Messung der Lösungsviskositäten bei 40°C und 100°C und anschließender Umrechnung entsprechend der in der ISO-Norm enthaltenen Tabellen bestimmt. Als Lösungsmittel wurde Solvent Neutral SN 100 eingesetzt, ein Produkt der fraktionierten Erdöldestillation mit einem Siedebereich von 230 bis 280°C und einer Viskosität (bei 50°C) von 14,8 mm²/sec (Wintershall Mineralöl GmbH).

**Tabelle**

| Beispiel | Mn [g/mol] | M_{w}/Mₙ | Viskosität bei 40°C [mm²/sec] | VI |
|---|---|---|---|---|
| 1 | 7500 | 2,1 | 7690 | 329 |
| 2 | 7900 | 2,2 | 8800 | 330 |
| 3 | 17600 | 2,2 | 77000 | 271 |
| 4 | 18600 | 2,1 | 82000 | 256 |
| V1 | 6000 | 2,4 | 4300 | 159 |
| V2 | 14700 | 2,5 | 65000 | 153 |

## Patentansprüche

1. Copolymere mit einem Viskositätsindex VI von größer als 160 von
A) 99,0 bis 99,99 Gew.-% C₂- bis C₂₀-Alk-1-enen
und
B) 0,01 bis 1,0 Gew.-% C₅- bis C₂₀-α,ω-Dienen mit isolierten Doppelbindungen.

2. Copolymere nach Anspruch 1 mit einem Viskositätsindex VI im Bereich von 160 bis 500.

3. Copolymere nach den Ansprüchen 1 bis 2, wobei als Monomere A) 99,0 bis 99,99 Gew.-% C₆- bis C₁₂-Alk-1-ene eingesetzt werden.

4. Copolymere nach den Ansprüchen 1 bis 3, wobei als Monomere B) 0,01 bis 1,0 Gew.-% C₆- bis C₁₀-α,ω-Diene mit isolierten Doppelbindungen eingesetzt werden.

5. Verfahren zur Herstellung von Copolymeren gemäß den Ansprüchen 1 bis 4, dadurch gekennzeichnet, daß man bei Temperaturen im Bereich von -50 bis 300°C und Drücken im Bereich von 0,5 bis 3000 bar in Gegenwart eines Katalysatorsystems die Monomeren A) und B) polymerisiert.

6. Verfahren nach Anspruch 5, dadurch gekennzeichnet, daß als Katalysatorsystem ein solches eingesetzt wird, das als aktive Bestandteile einen Metallocenkomplex und eine metalloceniumionenbildende Verbindung enthält.

7. Verwendung von Copolymeren gemäß den Ansprüchen 1 bis 4 als Viskositätsverbesserer in Schmierstoffen und Motorölen.
